# EUROPEAN PATENT APPLICATION

(11) **EP 3 232 248 A1**
(43) Date of publication of application: **18.10.2017**
(21) Application number: 15867036.4
(22) Date of filing: 30.10.2015
(51) Int. Cl.: G02B 27/01

(54) **TRANSMISSIVE AUGMENTED REALITY NEAR-EYE DISPLAY**

(30) Priority: 08.12.2014 CN 201410743262
(71) Applicant: Beijing ANTVR Technology Co., Ltd., Beijing 100083 (CN)
(72) Inventor: QIN, Zheng, Beijing 100083 (CN)
(74) Representative: Gardiner, Stephen Robin
(86) International application number: PCT/CN2015/093329
(87) International publication number: WO 2016/091030

(57) **Abstract**

The present invention provides a see-through augmented reality near-eye display successively including a first microlens array for shooting reality, an imaging unit, a display screen, and a second microlens array in decreasing order of distances from a human eye:, and further including an image processing unit, particularly, the first microlens array includes a plurality of microlenses units for focusing a beam from the external reality; the imaging unit is arranged on the focal plane of the first microlens array, for imaging an optical signal collected by the first microlens array in a photosensitive manner; the image processing unit is configured to acquire the image data induced by the imaging unit so as to obtain a reality image with different depths of field, and fuse the virtual image into the reality image for presenting on the display screen; the display screen is arranged on the focal plane of the second microlens array, for presenting the image fused by the image processing unit to a user; and the second microlens array is configured to diverge and enlarge the image displayed on the display screen and then project on a retina of a human eye, so as to form a near-eye image discernible by the human eye.

## Description

### TECHNICAL FIELD

The present invention relates to a near-eye display, and more particularly to a see-through augmented reality near-eye display.

### BACKGROUND

Augmented reality (Augmented Reality, referred to as AR for short), also known as mixed reality, is a new technology developed on the basis of virtual reality. AR can add the user's perception on the real world through information provided by a computer system, apply virtual information to the real world and superimpose virtual objects, scenes or system prompt messages generated by the computer onto the real scene, so as to implement augmented reality. AR is usually implemented in a combination of a see-through helmet display system and a registration (positioning of a user's observation point and a computer-generated virtual object in the AR system) system. The augmented reality technology not only presents information of the real world, but also presents virtual information, and the two types of information complement and superimpose one another. In a visualized augmented reality, the user can utilize the helmet display to overlap the real world and computer graphics together, resulting in the computer graphics surrounded by the real world.

The existing augmented reality near-eye display device is classified into two broad categories on the basis of the specific implementation principle, i.e., a see-through HMD based on an optical principle (Optical See-through HMD) and a see-through HMD based on a video synthesis technique (Video See-through HMD), respectively, in particular, the see-through HMD based on an optical principle are generally implemented by a half transparent and half reflecting mirror, while it is difficult for the see-through HMD based on a video synthesis technique to achieve a real-time display and a stereoscopic effect. Neither of the above two can acquire a reality image with a stereoscopic effect, especially a panoramic depth reality image, and therefore, increasingly stringent requirements on the visual effect by the user cannot be satisfied any more.

Accordingly, it is desirable to have an augmented reality near-eye display with a panoramic depth reality image that is capable of obtaining a real-time stereoscopic effect.

### SUMMARY

The object of the present invention is to provide a see-through augmented reality near-eye display successively including a first microlens array for shooting reality, an imaging unit, a display screen, and a second microlens array in decreasing order of distances from a human eye, and further including an image processing unit, particularly, the first microlens array includes a plurality of microlenses units for focusing a beam from the external reality; the imaging unit is arranged on the focal plane of the first microlens array, for imaging an optical signal collected by the first microlens array in a photosensitive manner; the image processing unit is configured to acquire the image data induced by the imaging unit so as to obtain a reality image with different depths of field, and fuse the virtual image into the reality image for presenting on the display screen; the display screen is arranged on the focal plane of the second microlens array, for presenting the image fused by the image processing unit to a user; and the second microlens array is configured to diverge and enlarge the image displayed on the display screen and then project on a retina of a human eye, so as to form a near-eye image discernible by the human eye.

Preferably, the microlens has a circular, regular hexagonal or rectangular shape.

Preferably, the plurality of microlenses units have the same focal lengths.

Preferably, the imaging unit is a CCD or a CMOS sensor.

Preferably, the imaging unit comprises a plurality of imaging subunits, and each imaging subunit is set to correspond to each microlenses unit of the first microlens array, respectively.

Preferably, the imaging unit, the image processing unit and the display screen are successively attached together.

Preferably, a beam guiding unit is provided between the first microlens array and the imaging unit.

Preferably, the beam guiding unit is a shroud with a plurality of cylindrical structures made of an opaque material, each cylindrical structure corresponds to one microlens unit of the first microlens array.

Preferably, the microlens unit of the first microlens array corresponds to the microlens unit of the second microlens array one-to-one.

Preferably, the depth of field of the virtual image matches with the depth of field of the reality image.

The see-through augmented reality near-eye display according to the present invention has a reality image with a stereoscopic effect, significantly improving the visual effect of the user, by means of analog simulation then superimposition, the virtual information can be applied to the real world, and perceived by human senses, thereby, the sensory experience beyond the reality can be achieved.

It should be understood that both the foregoing general description and the following detailed description are exemplary and explanatory and should not be construed as limitations on the protection scope of the invention.

### BRIEF DESCRIPTION OF DRAWINGS

Additional objects, functions and advantages of the invention will be set forth in the description that follows, with reference to the accompanying drawings in which:
FIG. 1(a) schematically shows a structural diagram of a see-through augmented reality near-eye display according to the first embodiment of the present invention;
FIG. 1(b) schematically shows a structural diagram of a see-through augmented reality near-eye display with a beam guiding unit according to the second embodiment;
FIG. 1(c) schematically shows a partial structural diagram of the beam guiding unit in FIG. 1(b); and
FIG. 2 shows an embodiment of an image displayed by a see-through augmented reality near-eye display according to the present invention.

### DESCRIPTION OF EMBODIMENTS

Objects and functions and methods for implementing the objects and functions of the present invention will be set forth with reference to exemplary embodiments. However, the present invention is not limited to the exemplary embodiments disclosed below and can be implemented in various forms. The essence of the specification is merely to help persons skilled in the art to comprehensively understand specific details of the present invention.

Hereinafter, embodiments of the present invention will be described with reference to the accompanying drawings. In the drawings, identical reference numerals refer to identical or similar components.

The present invention provides a see-through augmented reality near-eye display, by means of this near-eye display, a panoramic deep scene in front of the user can be viewed in real time, other virtual images can be fused into the panoramic deep scene through image processing, and the user can view images with a stereoscopic effect.

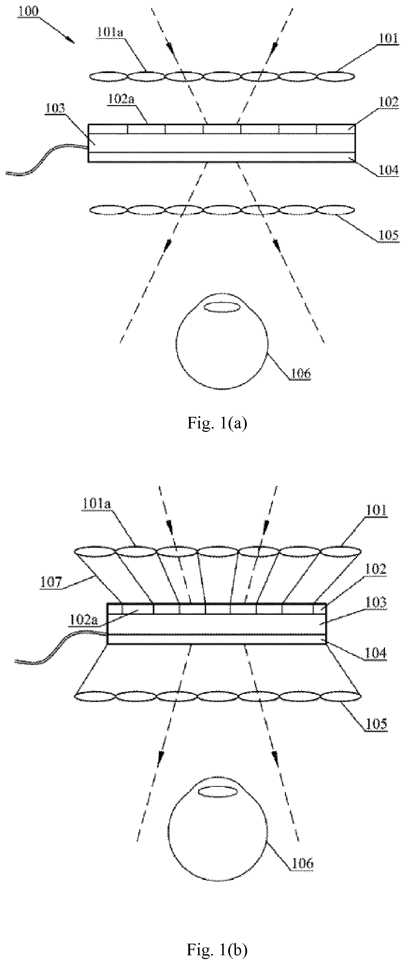

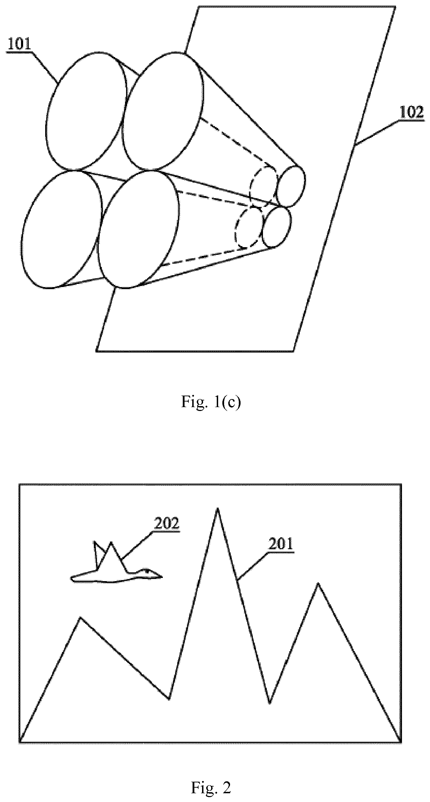

FIG. 1 shows a microlens array-based see-through augmented reality near-eye display according to the first embodiment of the present invention. As shown in FIG. 1, the near-eye display 100 successively includes a first microlens array 101 for shooting reality, an imaging unit 102, an image processing unit 103, a display screen 104, and a second microlens array 105 in decreasing order of distances from a human eye.

The first microlens array 101 includes a plurality of microlenses units 101a for focusing a beam from the external reality, the microlens can have a circular, regular hexagonal or rectangular shape, or the like. The plurality of microlenses units 101a of the first microlens array 101 can be set to have the same or different focal lengths, so as to acquire optical information for imaging at different distances.

The imaging unit 102 is arranged on the focal plane of the first microlens array 101, for imaging an optical signal collected by the first microlens array 101 in a photosensitive manner. The sensor of the imaging unit 102 can be, for example, a CCD or a CMOS, for receiving an imaging light intensity signal and converting it into an electric signal for storage. The imaging unit preferably includes a plurality of imaging subunits 102a. Each imaging subunit is set to correspond to each microlenses unit 101a of the first microlens array 101, respectively. The combination of the imaging unit 102 and the first microlens array 101 achieves the function of a light field camera, that is, data of light rays from all directions in one scene can be captured, and images with different depths of field can be obtained through an image processing unit 103.

The image processing unit 103 is configured to acquire the image data induced by the imaging unit 102 and process the data, so as to obtain a reality image with different depths of field, and can fuse the virtual image into the reality image, and finally present the fused virtual image on the display screen 104 for viewing by a user, thus achieving an effect of augmented reality. In addition, the image processing unit 103 also has functions of re-processing the acquired reality images and identifying identifications in the image, for example, by adjusting the sharpness, the contrast, the brightness, the identification mark and the like, so as to obtain a reality image with different effects, further achieving an effect of augmented reality.

The display screen 104 is arranged on the focal plane of the second microlens array 105, for presenting the image fused by the image processing unit 103 to a user. A real reality image and a virtual object are superimposed in real time to co-exist in the same picture or space. The display screen 104 can adopt an LCD, LED or OLED. Preferably, the imaging unit 102, the image processing unit 103 and the display screen 104 are successively attached together to form a whole, thereby effectively reducing the occupied space and the volume of the near-eye display according to the present invention.

The second microlens array 105 is configured to diverge and enlarge the image displayed on the display screen 104 and then project on a retina of a human eye 105, so as to form a near-eye image discernible by the human eye 105, and the distance between the display screen 104 and the human eye 106 is at least 10mm.

FIG. 1(b) schematically shows a structural diagram of a see-through augmented reality near-eye display with a beam guiding unit 107 according to the second embodiment, the beam guiding unit 107 is used to guide the beam imaged by the first microlens array 101, allowing rays having a greater angle between the optical axes of the microlens units of the first microlens array 101 to pass through the light the first microlens array 101 and project onto the imaging unit 102. As shown in FIG. 1(b), the beam guiding unit 107 is provided between the first microlens array 101 and the imaging unit 102. In this embodiment, the beam guiding unit 107 is implemented in the form of a shroud, and the beam guiding unit 107 is a shroud with a plurality of cylindrical structures made of an opaque material. Each cylindrical structure corresponds to one microlens unit 101a of the first microlens array 101.

FIG. 1(c) schematically shows a stereoscopic structure of the beam guiding unit 107 in FIG. 1(b). FIG. 1(c) only shows a partial microlenses unit 101a, four cylindrical structures of the corresponding beam guiding unit 107, and the imaging unit 102. As shown in FIG. 1(c), the beam guiding unit 107 is equivalent to a light path, the beam guiding unit 107 can be used to prevent focused beams of adjacent microlenses units 101a from interfering with each other, and play roles of filtration and guidance. Each microlenses unit 101a corresponds to one of the cylindrical structures of the beam guiding units 107, the two ends thereof have matched shapes with those of the microlens, one end is sealedly connected to the edge of the microlens unit 101a and the other end is openly connected to the corresponding area of the imaging unit 102.

FIG. 2 shows an embodiment of an image displayed by a see-through augmented reality near-eye display according to the present invention, a user wears the near-eye display according to the present invention to watch a peak 201 ahead, first, a light field camera consisting of the first microlenses unit 101 and the imaging unit 102 acquires all the rays of the peak 201 ahead and converts into electrical signal image data, the image processing unit 103 converts the image data into stereoscopic image with different depths of field, and displays the peak 201 with different depths of field according to user's requirements. Other virtual images can be fused into the positions with different depths of field in the reality image by the image processing unit 103, and the virtual image and the reality image have matched depth of field. In this embodiment, for example, the virtual image flying bird 202 is fused into the reality image peak 201, thus the user can watch a scene that the flying bird 202 is flying in front of the peak 201. Of course, various different types of virtual contents can be virtualized in the reality image, such as virtual landscapes, virtual texts, virtual characters, and virtual items and identifications, different contents can be virtualized, so that contents of reality image can be enriched greatly and viewing quality of reality image also can be improved.

In conclusion, the see-through augmented reality near-eye display according to the present invention has a reality image with a stereoscopic effect, significantly improving the visual effect of the user. The display can be widely applied to fields, such as tourism exhibition, simulation training, games and entertainment, medical and military fields. The augmented reality near-eye display "seamlessly" integrates the real world information with virtual world information, analog simulates and then superimposes entity information which is difficult to experience within a certain time space range in the original real world through science and technology, such as computer, so that the virtual information can be applied to the real world, and perceived by human senses, thereby, the sensory experience beyond the reality can be achieved.

The drawings are illustrative only and are not drawn to scale. Although the invention has been described with reference to preferred embodiments, it should be understood that the protection scope of the invention is not limited to the embodiments described herein.

Other embodiments of the invention will be easily conceivable and understood by persons skilled in the art from a consideration of the specification and practice of the invention disclosed herein. The specification and embodiments are considered as exemplary only, and the true scope and spirit of the invention is defined by the appended claims.

## Claims

1. A see-through augmented reality near-eye display successively comprising a first microlens array for shooting reality, an imaging unit, a display screen, and a second microlens array in decreasing order of distances from a human eye, and further comprising an image processing unit, wherein,
the first microlens array comprises a plurality of microlenses units for focusing a beam from the external reality;
the imaging unit is arranged on the focal plane of the first microlens array, for imaging an optical signal collected by the first microlens array in a photosensitive manner;
the image processing unit is configured to acquire the image data induced by the imaging unit so as to obtain a reality image with different depths of field, and fuse the virtual image into the reality image for presenting on the display screen;
the display screen is arranged on the focal plane of the second microlens array, for presenting the image fused by the image processing unit to a user; and
the second microlens array is configured to diverge and enlarge the image displayed on the display screen and then project on a retina of a human eye, so as to form a near-eye image discernible by the human eye.

2. The see-through augmented reality near-eye display according to claim 1, wherein, the microlens has a circular, regular hexagonal or rectangular shape.

3. The see-through augmented reality near-eye display according to claim 1, wherein, the plurality of microlenses units have the same focal lengths.

4. The see-through augmented reality near-eye display according to claim 1, wherein, the imaging unit is a CCD or a CMOS sensor.

5. The see-through augmented reality near-eye display according to claim 1, wherein, the imaging unit comprises a plurality of imaging subunits, and each imaging subunit is set to correspond to each microlenses unit of the first microlens array, respectively.

6. The see-through augmented reality near-eye display according to claim 1, wherein, the imaging unit, the image processing unit and the display screen are successively attached together.

7. The see-through augmented reality near-eye display according to claim 1, wherein, a beam guiding unit is provided between the first microlens array and the imaging unit.

8. The see-through augmented reality near-eye display according to claim 7, wherein, the beam guiding unit is a shroud with a plurality of cylindrical structures made of an opaque material, each cylindrical structure corresponds to one microlens unit of the first microlens array.

9. The see-through augmented reality near-eye display according to claim 1, wherein, the microlens unit of the first microlens array corresponds to the microlens unit of the second microlens array one-to-one.

10. The see-through augmented reality near-eye display according to claim 1, wherein, the depth of field of the virtual image matches with the depth of field of the reality image.
